# FASCICULE DE BREVET EUROPEEN

(11) **EP 2 717 163 B1**
(45) Date de publication et mention de la délivrance du brevet: **04.11.2015**
(21) Numéro de dépôt: 13186581.8
(22) Date de dépôt: 30.09.2013
(51) Int. Cl.: G06F 11/36

(54) **Procédé et dispositif de sauvegarde d'un état d'un circuit sous test émulé dans un émulateur et de son environnement de test logiciel, et procédé et dispositif de restauration correspondants**
Verfahren und Vorrichtung zur Speicherung des Zustands eines Schaltkreises, der in einem Emulator einem emulierten Test unterzogen wird, und seiner Softwaretestumgebung, und entsprechendes Wiederherstellungsverfahren und entsprechende Wiederherstellungsvorrichtung
Method and device for backing up a status of a circuit being tested, emulated in an emulator and software test environment thereof, and corresponding recovery method and device

(30) Priorité: 03.10.2012 FR 1259376
(43) Date de publication de la demande: 09.04.2014
(73) Titulaire: SYNOPSYS EMULATION AND VERIFICATION, 91320 Wissous (FR)
(72) Inventeur: Dumoulin, Frédéric, 78114 Magny les Hameaux (FR)
(74) Mandataire: Zapalowicz, Francis

(56) Documents cités:
- EP-A2- 0 411 904
- EP-A2- 0 849 671
- US-A1- 2008 320 333
- "Standard Co-Emulation Modeling Interface (SCE-MI) Reference Manual DRAFT Version 1.0", INTERNET CITATION, 29 mai 2003 (2003-05-29), XP002440606, Extrait de l'Internet: URL:http://www.eda.org/itc/scemi.pdf [extrait le 2007-07-03]

## Description

L'invention concerne le domaine de la conception électronique assistée par ordinateur (CAO électronique), notamment celui de la vérification fonctionnelle de circuits intégrés, et plus généralement de systèmes électroniques, à l'aide d'un émulateur connecté à une station hôte, et plus particulièrement, lors d'une vérification fonctionnelle, la sauvegarde d'états du circuit sous test et de son environnement de test ainsi que la restauration de ces états.

Les circuits numériques intégrés sont extrêmement complexes. Ils incorporent généralement des microprocesseurs qui permettent d'exécuter des logiciels embarqués incluant un système d'exploitation (« operating system », en langue anglaise) et des applications logicielles.

Il est impossible pour des concepteurs de tels circuits de définir et de développer un jeu complet de situations de test permettant de vérifier totalement le fonctionnement de tels circuits.

Aussi, les concepteurs écrivent-ils un jeu partiel de test. Par ailleurs, lorsque les circuits comportent des processeurs, il est généralement nécessaire d'exécuter des logiciels embarqués durant la phase de vérification. Et, pour atteindre certains états de test, les circuits électroniques doivent à la fois amorcer (« boot » en langue anglaise) un système d'exploitation et exécuter ces applications logicielles embarquées.

C'est le cas notamment dans le domaine de la téléphonie mobile, des appareils photo numériques, des tablettes, ...

La validation des circuits à l'aide d'un pur simulateur logiciel n'est absolument pas adaptée, compte tenu du nombre extrêmement important de cycles d'horloge nécessaires (de l'ordre de 1 milliard pour amorcer un système d'exploitation à environ des dizaines de milliards pour l'exécution d'applications logicielles).

C'est la raison pour laquelle les concepteurs de circuits électroniques complexes utilisent des systèmes matériels pour accélérer la vérification comportementale de ces systèmes. Ces systèmes matériels reconfigurables, ou émulateurs, sont constitués généralement d'une ou de plusieurs cartes sur lesquelles on retrouve des circuits reconfigurables de type FPGA (Field Programmable Gate Array) par exemple commercialisés par la société Xilinx, ou bien des circuits reconfigurables à façon (customs) ou bien des processeurs parallèles, et qui sont connectés entre eux par des moyens fixes ou reconfigurables. Les cartes constituant le système matériel reconfigurable (émulateur) peuvent être enfichées dans un ou plusieurs châssis. Une interface assure la communication du système matériel reconfigurable avec une station de contrôle (ou station hôte) généralement un ordinateur.

Le circuit sous test émulé dans l'émulateur peut être stimulé par un dispositif matériel directement connecté à l'émulateur (on parle alors de connexion in-situ), ou bien par un dispositif de test lui-même émulé dans l'émulateur (on parle alors de banc de test (« test-bench ») synthétisable embarqué dans l'émulateur), ou bien par un banc de test logiciel exécuté sur la station hôte.

Comme on le verra plus en détails ci-après, un aspect de l'invention concerne plus particulièrement la vérification fonctionnelle d'un dispositif sous test émulé dans un émulateur stimulé par un banc de test logiciel d'une catégorie particulière exécuté sur la station hôte.

Typiquement, un émulateur est capable d'exécuter le dispositif sous test à une vitesse d'un million de cycles d'horloge/seconde et son mécanisme de traçage lui permet de tracer jusqu'à un million de cycles du dispositif sous test.

Ceci est toutefois faible comparé aux milliards de cycles nécessaires pour une vérification approfondie d'un système sous test. Aussi, la durée de test d'un circuit complexe à l'aide d'un émulateur peut atteindre plusieurs heures voire plusieurs jours.

Il devient alors particulièrement intéressant de pouvoir créer des points de sauvegarde lors d'une vérification fonctionnelle de test d'un circuit sous test dans un émulateur connecté à une station hôte. En effet, lorsqu'un défaut est détecté dans le fonctionnement du circuit lors de la phase de test, il est plus avantageux de recommencer le test à partir d'un point de sauvegarde antérieur plutôt que de recommencer le test à partir du début de la vérification fonctionnelle, surtout si le défaut a été détecté après une durée de test extrêmement longue.

Il est également particulièrement avantageux de pouvoir créer par exemple un point de sauvegarde après une première partie de test longue et commune à plusieurs tests distincts. Ceci évite de recommencer la partie commune des séquences de test et de permettre de retravailler les séquences distinctes à partir du point de sauvegarde.

On connaît actuellement des outils informatiques permettant d'effectuer des sauvegardes de logiciels, notamment dans les simulateurs purement logiciels.

On connaît également des outils permettant d'effectuer une sauvegarde de l'état d'un émulateur.

Le document EP 0 411 904 propose un environnement pour l'émulation, la simulation et le test de micro-contrôleurs tant sur le plan matériel que logiciel. Le système permet d'accéder, charger ou modifier les registres du matériel et de sauvegarder un état de celui-ci.

Parmi les environnements de test logiciels exécutables sur la station hôte, on distingue ceux qui, comme par exemple des co-simulateurs logiciels, incorporent lors de leur écriture par des développeurs leur propre mécanisme de sauvegarde de leur état, et ceux qui ne comportent aucun mécanisme de sauvegarde de leur état (mécanisme ou procédure qui aurait été développée par les programmeurs de tels environnements de test logiciels). Cette dernière catégorie comporte notamment ceux conformes à la norme SCE-MI (Standard Co-Emulation Modeling Interface) de l'organisation Accellera.

La sauvegarde d'un état d'un circuit sous test émulé dans un émulateur et de son environnement de test mettant en oeuvre au moins un processus logiciel applicatif exempt d'un propre mécanisme de sauvegarde de son état et exécuté sur une station hôte communicant avec l'émulateur, est d'une complexité toute autre en raison notamment des contraintes complexes résultant de la communication entre l'émulateur et le ou les logiciels applicatifs, en particulier au niveau de la synchronisation et de l'absence de mécanisme propre de sauvegarde du processus logiciel applicatif, et n'a à ce jour pas donné lieu à des solutions industriellement acceptables.

Selon un mode de mise en oeuvre et de réalisation de l'invention, il est proposé de sauvegarder au moins un état, ou point de sauvegarde, formé par une sauvegarde de l'état du circuit sous test émulé dans l'émulateur et de la sauvegarde d'un fichier de programme exécutable du ou de processus logiciels mis en oeuvre dans la station hôte compte tenu de la communication entre la station hôte et l'émulateur et de l'absence de mécanisme de sauvegarde de l'état du ou des processus logiciels applicatifs qui leur soient propres .

Il est également proposé d'élaborer un tel point de sauvegarde sans nécessiter de modification du code source du banc de test logiciel, de telle sorte que les développeurs logiciels n'ont pas à écrire de procédure spécifique pour sauvegarder les données internes des bancs de test ni de procédure spécifique pour recharger ces données. En d'autres termes l'élaboration de tels points de sauvegarde est totalement « transparente » pour les développeurs des bancs de test logiciels.

Il est également proposé d'élaborer un tel point de sauvegarde permettant à un utilisateur de stopper une vérification fonctionnelle en cours pour autoriser une autre vérification fonctionnelle effectuée par lui ou un tiers, puis de continuer la vérification fonctionnelle interrompue à partir du point de sauvegarde.

L'invention permet également de générer un nombre arbitraire de points de sauvegarde durant une vérification fonctionnelle de test.

Il est également proposé de pouvoir restaurer l'état précédemment sauvegardé et d'effectuer une nouvelle vérification fonctionnelle de test à partir d'un point de sauvegarde, sur le même émulateur et sur la même station hôte que ceux utilisés pour la génération du point de sauvegarde ou bien sur un autre émulateur ayant une configuration matérielle compatible, connectée à une autre station hôte compatible avec la première.

Selon un aspect de l'invention, il est proposé un procédé de sauvegarde d'au moins un état d'un circuit sous test et de son environnement de test, le circuit sous test étant émulé dans un émulateur et l'environnement de test mettant en oeuvre au moins un processus logiciel applicatif, exempt d'un propre mécanisme de sauvegarde de son état, exécuté sur une station hôte communicant avec l'émulateur par l'intermédiaire d'une interface (par exemple une carte PCI) gérée par un module de gestion au sein de la station hôte, l'émulateur communicant en écriture avec le processus logiciel applicatif par l'intermédiaire d'une mémoire partagée lue au moins par le processus logiciel.

Selon cet aspect, le procédé comprend
- un arrêt du processus logiciel applicatif avec figeage des données de test et des pointeurs d'adresse dans la mémoire partagée,
- un arrêt de l'émulateur, l'écriture de données par l'émulateur dans la mémoire partagée entre l'arrêt du processus logiciel et l'arrêt de l'émulateur n'étant autorisée qu'en présence d'emplacements mémoire disponibles dans la mémoire partagée,
- une sauvegarde d'un premier fichier représentatif de l'état de l'émulateur lors de son arrêt,
- une déconnexion du processus logiciel applicatif dudit module de gestion d'interface, et
- une sauvegarde d'un fichier de programme exécutable représentatif de l'état du processus logiciel applicatif lors de son arrêt.

L'arrêt du processus logiciel applicatif avec figeage de données de test et des pointeurs d'adresse s'effectue avant l'arrêt de l'émulateur de façon à éviter, dans le cas contraire, un problème si le logiciel applicatif cherche à écrire dans un émulateur arrêté.

Par ailleurs, il est possible que l'émulateur cherche à écrire des données dans la mémoire partagée avant qu'il soit arrêté. Ceci est possible à condition qu'il y ait des emplacements mémoire disponibles dans la mémoire partagée. Dans le cas contraire, l'écriture des données dans la mémoire partagée par l'émulateur est non autorisée. Ceci permet d'éviter des pertes de données.

Par ailleurs, la déconnexion du processus logiciel applicatif du module de gestion de l'interface est avantageusement effectuée avant la sauvegarde du fichier de programme exécutable.

En effet, généralement le module de gestion est inséré dans le noyau de la station hôte et initialisé par un autre programme avant toute autre utilisation de l'émulateur. Et actuellement, ni le système d'exploitation (« Operating System : OS ») ni les outils classiques de sauvegarde de logiciels, par exemple l'outil connu par l'homme du métier sous l'acronyme DMTCP, ne permettent de refaire l'initialisation du module depuis le processus logiciel.

Par ailleurs, cette déconnexion du processus logiciel du module de gestion de l'interface est obligatoire dans un mode particulier, dit mode « suspend » de façon à pouvoir réutiliser l'émulateur avec un autre logiciel applicatif.

La sauvegarde du fichier de programmes exécutables peut être effectuée, après déconnexion du processus logiciel applicatif du module de gestion de l'interface, par le système d'exploitation de la station hôte dans un fichier de mémoire virtuelle, par exemple l'espace du disque dur, communément désigné par l'homme du métier sous le vocable anglo-saxon « swap ».

En variante, la sauvegarde du fichier de programmes exécutables peut être effectuée, après déconnexion du processus logiciel applicatif du module de gestion de l'interface, par un outil informatique spécifique, par exemple l'outil DMTCP, dans un fichier de mémoire de type ROM, par exemple sur le disque dur.

Dans certains cas, il est possible de communiquer depuis la station-hôte vers l'émulateur en utilisant de la mémoire partagée pour envoyer des données dans l'émulateur.

Plus précisément, le processus logiciel applicatif écrit les données dans la mémoire partagée, spécifie à l'émulateur l'adresse et le nombre de ces données dans la mémoire partagée ainsi que l'adresse de destination des données dans l'émulateur, puis il commande à l'émulateur de commencer le transfert. L'émulateur lit les données dans la mémoire partagée et les écrit dans les ressources à l'adresse spécifiée.

Ce mécanisme est connu par l'homme du métier sous l'acronyme DMA (Direct Memory Access).

Dans ce cas il faut attendre que les transferts en cours soient tous terminés avant d'arrêter l'émulateur. Et si cet envoi de données déclenche une réponse de l'émulateur, cette réponse doit être faite s'il y a des emplacements libres dans la mémoire partagée, avant que d'autres données éventuelles ne résultant pas de ces transferts puissent être écrites s'il reste des emplacements libres.

Ainsi selon un mode de mise en oeuvre dans lequel la mémoire partagée est lue par l'émulateur lors de transfert de données émanant du processus logiciel applicatif à destination de l'émulateur, le procédé comprend, après l'arrêt du processus logiciel applicatif et avant l'arrêt de l'émulateur, une poursuite des transferts en cours jusqu'à ce qu'ils soient terminés, et en présence d'emplacement libres dans la mémoire partagée, l'écriture dans la mémoire partagée par l'émulateur de données résultant de ces transferts est prioritaire.

Dans certains cas, une partie de la sauvegarde du premier fichier (configuration de l'émulateur) peut être effectuée en tâche de fond parallèlement à la déconnexion du processus logiciel applicatif et à la sauvegarde du fichier de programme exécutable.

Selon un autre aspect, il est proposé un procédé de restauration d'un état d'un circuit sous test et de son environnement de test sauvegardé par le procédé tel que défini ci-avant, ce procédé de restauration comprenant
- un chargement du fichier de programme exécutable dans une mémoire programme de la station hôte,
- une reconnexion du processus logiciel au module de gestion de ladite interface avec réinitialisation des adresses de ladite interface et de ladite mémoire partagée dans les registres du processus logiciel,
- un rechargement de l'état de l'émulateur à partir du premier fichier sauvegardé,
- un lancement de l'émulateur, et
- un lancement du processus logiciel.

La réinitialisation des adresses de l'interface et de la mémoire partagée dans les registres du processus logiciel est en effet nécessaire pour assurer une restauration correcte car lors de la reconnexion du processus logiciel au module de gestion, l'adresse de ladite interface et de la mémoire partagée ont été généralement modifiées et il convient donc de prendre en compte ces nouvelles adresses.

Selon un autre aspect, il est proposé un dispositif de sauvegarde d'au moins un état d'un circuit sous test et de son environnement de test, le circuit sous test étant destiné à être émulé dans un émulateur, et l'environnement de test étant destiné à mettre en oeuvre au moins un processus logiciel applicatif, exempt d'un propre mécanisme de sauvegarde de son état, exécutable sur une station hôte configurée pour communiquer avec l'émulateur par l'intermédiaire d'un interface gérée par un module de gestion au sein de la station hôte.

L'émulateur est par ailleurs configuré pour communiquer en écriture avec le processus logiciel applicatif par l'intermédiaire d'une mémoire partagée configurée pour être lue au moins par ledit processus logiciel ;
le dispositif de sauvegarde comprend
- des premiers moyens de commande configurés pour arrêter le processus logiciel applicatif avec figeage des données de test et des pointeurs d'adresses dans la mémoire partagée,
- des deuxièmes moyens de commande configurés pour arrêter l'émulateur et pour n'autoriser l'écriture de données par l'émulateur dans la mémoire partagée entre l'arrêt du processus logiciel et l'arrêt de l'émulateur qu'en présence d'emplacements mémoire disponibles dans la mémoire partagée,
- des premiers moyens de sauvegarde configurés pour effectuer une sauvegarde d'un premier fichier représentatif de l'état de l'émulateur lors de son arrêt,
- des troisièmes moyens de commande configurés pour déconnecter le processus logiciel applicatif dudit module de gestion de l'interface, et
- des deuxièmes moyens de sauvegarde configurés pour effectuer une sauvegarde d'un fichier de programme exécutable représentatif de l'état du processus logiciel applicatif lors de son arrêt.

Selon un mode de réalisation, les deuxièmes moyens de sauvegarde comprennent le système d'exploitation de la station hôte configuré pour effectuer la sauvegarde du fichier de programme exécutable, après déconnexion du processus logiciel applicatif du module de gestion de l'interface, dans un fichier de mémoire virtuelle.

En variante, les deuxièmes moyens de sauvegarde comprennent un outil informatique spécifique configuré pour effectuer la sauvegarde du fichier de programme exécutable, après déconnexion du processus logiciel applicatif du module de gestion de l'interface, dans un fichier de mémoire de type ROM.

Selon un mode de réalisation dans lequel la mémoire partagée est lue par l'émulateur lors de transfert de données émanant du processus logiciel applicatif à destination de l'émulateur, les deuxièmes moyens de commande sont en outre configurés pour, après l'arrêt du processus logiciel applicatif et avant l'arrêt de l'émulateur, autoriser une poursuite des transferts en cours jusqu'à ce qu'ils soient terminés, et en présence d'emplacement libres dans la mémoire partagée, autoriser prioritairement l'écriture dans la mémoire partagée par l'émulateur de données résultant de ces transferts.

Selon un mode de réalisation, les premiers moyens de sauvegarde sont configurés pour effectuer une partie de la sauvegarde du premier fichier en tâche de fond parallèlement à la déconnexion du processus logiciel applicatif et à la sauvegarde du fichier de programme exécutable.

Selon un autre aspect de l'invention, il est proposé un dispositif de restauration d'au moins un état d'un circuit sous test et de son environnement de test sauvegardé par le dispositif de sauvegarde tel que défini ci-avant, le dispositif de restauration comprenant
- des premiers moyens de traitement configurés pour charger le fichier de programme exécutable dans une mémoire programme de la station hôte, et pour reconnecter le processus logiciel au module de gestion de ladite interface avec réinitialisation des adresses de ladite interface et de ladite mémoire partagée dans les registres du processus logiciel,
- des deuxièmes moyens de traitement configurés pour recharger l'état de l'émulateur à partir du premier fichier sauvegardé, et
- des moyens de commande configurés pour redémarrer l'émulateur et le processus logiciel.

D'autres avantages et caractéristiques de l'invention apparaîtront à l'examen de la description détaillée de modes de mise en oeuvre et de réalisation, nullement limitatifs, et des dessins annexés sur lesquels :
- la figure 1 illustre schématiquement un mode de réalisation d'un dispositif de sauvegarde et un mode de réalisation d'un dispositif de restauration selon l'invention,
- les figures 2 à 5 illustrent schématiquement des modes de mise en oeuvre d'un procédé de sauvegarde et de restauration à partir d'un point de sauvegarde selon l'invention.

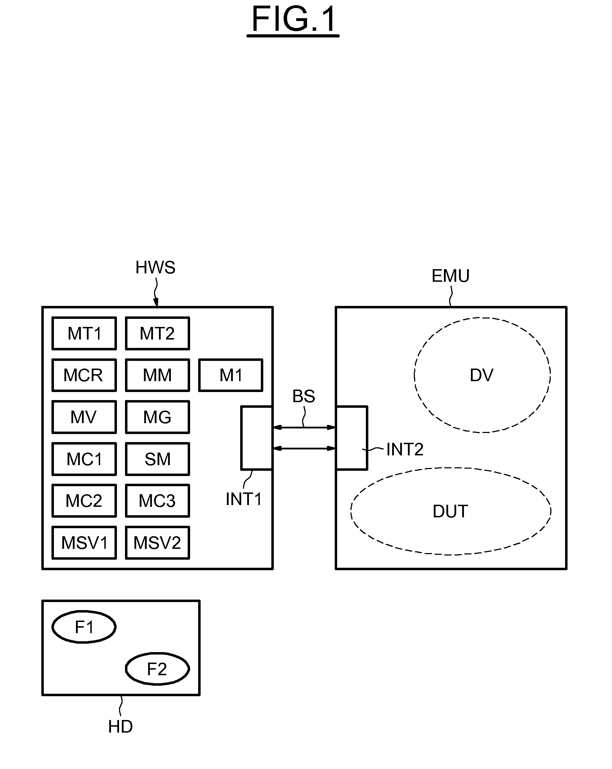

Sur la figure 1, la référence EMU désigne un émulateur connecté à une station hôte HWS par l'intermédiaire d'un bus BS. L'émulateur EMU est utilisé conjointement avec un jeu d'au moins un processus logiciel applicatif exécuté sur la station hôte HWS pour effectuer une vérification fonctionnelle d'un circuit sous test DUT. Ce processus logiciel applicatif est exempt de mécanisme propre de sauvegarde de son état.

En pratique, l'émulateur est utilisé pour émuler le comportement du circuit sous test DUT et éventuellement une partie de son environnement de test (moniteur(s) et pilote(s) DV).

Quant à la station hôte HWS, elle exécute un jeu de processus (processus logiciel(s), pilote(s) et moniteur(s)) pour stimuler le circuit sous test DUT et/ou analyser son comportement.

Un exemple non limitatif d'un circuit sous test est un processeur de téléphone portable équipé de son système d'exploitation (par exemple Windows) et un exemple de processus logiciel applicatif exempt de mécanisme propre de sauvegarde de son état est un modèle logiciel de l'écran LCD du téléphone. On pourra alors par exemple tester le contenu affiché sur l'écran du téléphone lors du démarrage du système d'exploitation du processeur.

Un exemple typique mais non limitatif, d'une station hôte HWS est un ordinateur, par exemple du type PC, opérant avec un système d'exploitation, par exemple le système d'exploitation LINUX.

Un exemple non limitatif de bus BS est par exemple un bus du type PCI-Express ou bien un bus USB. Le bus BS relie une première interface INT1 au sein de la station hôte HWS et une deuxième interface INT2 au sein de l'émulateur EMU.

Lorsque le bus BS est un bus du type PCI-Express, l'interface INT1 est par exemple la carte mère de la station hôte équipée d'un contrôleur et de connecteurs PCI-Express, et l'interface INT2 est par exemple une carte fille PCI-Express branchée dans un des connecteurs PCI-Express de la carte mère.

La station hôte HWS comporte par ailleurs un module de gestion logicielle MG, de structure classique et connue en soi, destiné à gérer l'interface INT1.

Dans l'exemple décrit ici, la station hôte HWS comporte également une mémoire partagée SM. L'émulateur EMU communique en écriture avec le ou les processus logiciels applicatifs exécutés sur la station hôte par l'intermédiaire de cette mémoire partagée SM qui est lue par le ou les processus logiciels.

Outre les moyens qui viennent d'être décrits, la station hôte HWS comporte de façon classique, une mémoire vive MV, une mémoire morte MM contenant le système d'exploitation et le ou les logiciels applicatifs, ainsi que différents moyens de commande MC1, MC2, MC3, MCR, des moyens de sauvegarde MSV1, MSV2 ainsi que des moyens de traitement MT1, MT2. Ces différents moyens sont réalisés de façon logicielle et on reviendra plus en détails ci après sur leur fonction dans la sauvegarde d'au moins un état du circuit sous test et de son environnement de test ainsi que dans la restauration de cet état.

Une vérification fonctionnelle est définie comme étant l'exécution de tous les processus logiciels impliqués dans l'environnement de test et exécutés sur la station hôte, conjointement avec l'émulation du circuit sous test DUT dans l'émulateur EMU.

Aussi, lors de cette vérification fonctionnelle, un état du circuit sous test et de son environnement de test est défini comme étant l'ensemble des états de tous les processus logiciels conjointement avec l'état de l'émulateur à un instant donné.

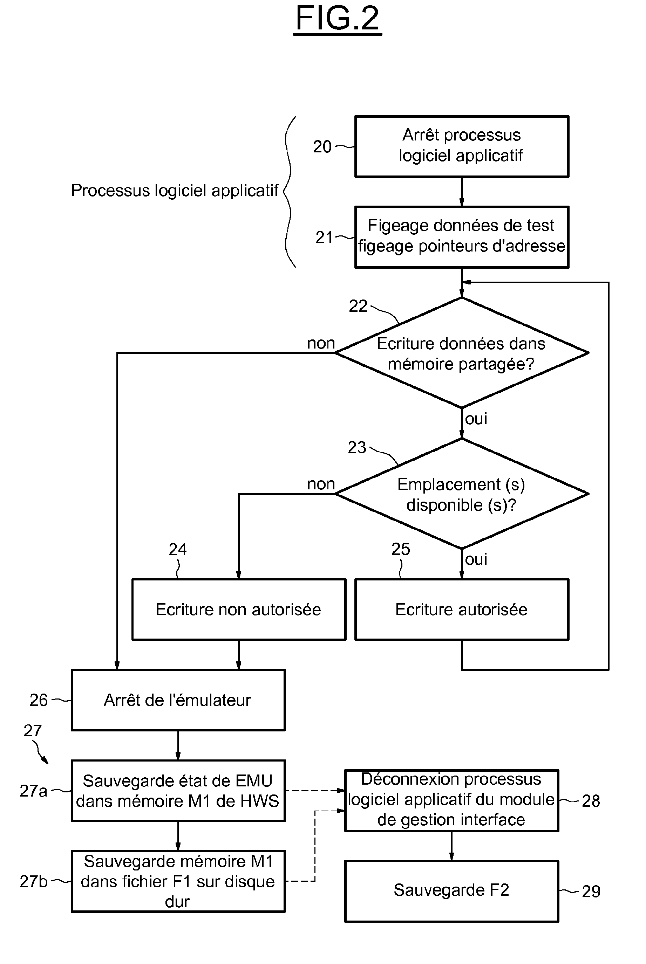

On se réfère maintenant plus particulièrement aux figures 2 et suivantes, pour décrire la sauvegarde de l'état du circuit sous test et de son environnement de test ainsi que la restauration dans cet état de façon à permettre la poursuite de la vérification fonctionnelle.

On suppose dans un premier temps qu'un seul processus logiciel applicatif tourne sur la station hôte HWS.

Tout d'abord, lorsque l'utilisateur souhaite sauvegarder l'état de sa vérification fonctionnelle, des premiers moyens de commande MC1 arrêtent le processus logiciel applicatif (étape 20, figure 2) avec figeage des données de test de l'utilisateur et figeage des pointeurs d'adresse dans la mémoire partagée (étape 21).

Cette opération d'arrêt d'un processus logiciel applicatif est parfaitement connue par l'homme du métier. A ce stade, le processus logiciel applicatif est interrompu c'est-à-dire qu'il est mis dans un état d'attente ; toutes les fonctions sont bloquées et il tourne en boucle. Les données de test utilisateur ainsi que les pointeurs d'adresse sont figés.

A ce stade, l'émulateur EMU n'est pas encore arrêté.

Il est en effet important d'arrêter le processus logiciel applicatif avant d'arrêter l'émulateur. En effet, dans le cas contraire, si l'émulateur était arrêté avant le processus logiciel applicatif et que le processus logiciel applicatif devait alors communiquer avec l'émulateur, il y aurait alors un problème.

Cela étant, l'arrêt du processus logiciel applicatif n'interdit pas l'écriture de données dans la mémoire partagée par l'émulateur à condition toutefois que des emplacements mémoire soient encore disponibles dans la mémoire partagée, qui est en pratique une pile (étapes 22 et 23, figure 2).

A titre d'exemple, dans cette implémentation, lorsque le ou les logiciels applicatifs de la station hôte lisent des données dans des emplacements mémoire de la mémoire partagée SM, ils remettent à zéro ce ou ces emplacements mémoire lus. Ainsi, des emplacements mémoire réinitialisés à zéro sont synonymes d'emplacements mémoire disponibles.

Aussi, dans l'étape 23, l'émulateur vérifie la présence d'emplacements mémoire réinitialisés à zéro dans le cas où il souhaite écrire des données dans la mémoire partagée.

A titre d'exemple non limitatif, cette vérification peut être effectuée par l'émulateur en vérifiant la valeur d'un compteur de nombre de données au sein de l'émulateur.

Plus précisément l'émulateur connait le nombre maximum de données qu'il peut écrire dans la mémoire partagée. Lorsqu'il écrit dans la mémoire partagée, il décrémente son compteur de nombre de données. Le processus logiciel applicatif détecte l'arrivée de données en scrutant les emplacements de la mémoire partagée qui ne sont pas à zéro. Lorsque le processus logiciel applicatif a traité des données, il met les emplacements mémoire correspondants de la mémoire partagée à zéro et envoie une commande d'acquittement à l'émulateur. Cet acquittement permet à l'émulateur d'incrémenter son compteur de nombre de données. Lorsque ce compteur a une valeur nulle, cela signifie qu'il n'y a plus de place disponible dans la mémoire partagée et l'émulateur arrête d'envoyer des données dans la mémoire partagée.

Dans le cas où un ou plusieurs emplacements mémoire sont disponibles, l'écriture des données dans ces emplacements mémoire est alors autorisée (étape 25).

Dans le cas contraire, l'écriture est non autorisée (étape 24).

L'émulateur est ensuite stoppé (étape 26). Les horloges système de l'émulateur sont arrêtées et l'émulateur est par conséquent figé.

L'étape d'arrêt de l'émulateur est effectuée par les deuxièmes moyens de commande MC2.

A ce stade, les premiers moyens de sauvegarde MSV1 effectuent une sauvegarde (étape 27 figure 2) d'un premier fichier F1 représentatif de l'état de l'émulateur lors de son arrêt (états des registres, des bascules, contenus de mémoires, valeurs des index de pointage mémoire, ...).

Une telle opération est également classique et connue en soi par l'homme du métier.

La sauvegarde du fichier F1 peut être effectuée par exemple sur le disque dur HD (figure 1) de la station hôte HWS.

Après arrêt de l'émulateur 26, les troisièmes moyens de commande MC3 déconnectent (étape 28) le processus logiciel applicatif du module de gestion MG de l'interface INT1. Cette déconnexion est effectuée par un appel système et à ce stade, le processus logiciel applicatif ne peut plus accéder à l'interface INT1.

Le pilote de l'émulateur est alors fermé. L'opération de fermeture d'un pilote est classique et connue en soi et est décrite par exemple dans l'ouvrage de O'Reilly et A. Rubini intitulé « Linux Device Drivers » première édition, Février 1998, page 51.

Le processus logiciel applicatif ne peut donc plus avoir accès à l'émulateur.

Les deuxièmes moyens de sauvegarde MSV2 effectuent ensuite une sauvegarde 29 d'un fichier de programmes exécutables F2 représentatifs de l'état du processus logiciel applicatif lors de son arrêt.

Plusieurs possibilités sont possibles pour la sauvegarde 29 du fichier de programmes exécutable F2.

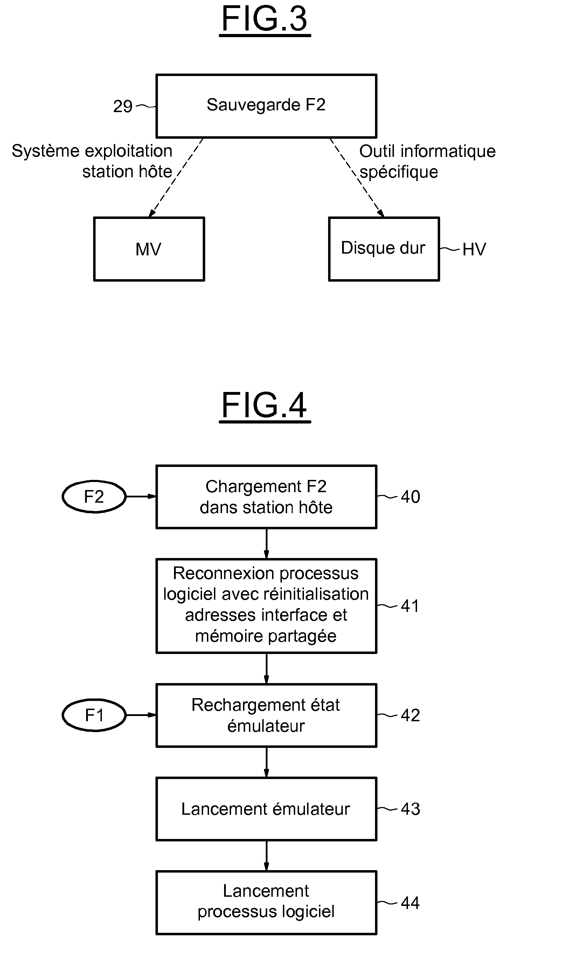

En effet, comme illustré sur la figure 3, la sauvegarde 29 du fichier F2 peut être effectuée, après déconnexion du processus logiciel applicatif du module de gestion d'interface, par un outil informatique spécifique dans un fichier de mémoire de type mémoire morte (ROM), par exemple sur le disque dur HD de la station hôte. Un exemple d'un tel outil spécifique est l'outil DMTCP décrit par exemple dans l'article de Ansel et autres intitulé « DMTCP : Transparent Checkpointing for Cluster Computations and the Desktop », Symposium on Parallel and Distributed Processing, 2009, IPDPS 2009, IEEE International, ou bien dans l'article intitulé « Transparent User-Level Chekpointing for the Native POSIX Thread Library for Linux », conference : « Parallel and Distributed Processing Techniques and Applications », 2006.

En variante, la sauvegarde du fichier de programmes exécutables F2 peut être effectuée, après déconnexion du processus logiciel applicatif du module de gestion de l'interface, par le système d'exploitation de la station hôte dans un fichier de mémoire virtuelle, par exemple dans la partie de disque dur communément désignée par l'homme du métier sous le vocable anglosaxon de « swap ».

Une telle variante est par exemple utilisée dans le cas où l'on souhaite suspendre la vérification fonctionnelle de façon à libérer temporairement l'émulateur pour exécuter une autre vérification fonctionnelle ou pour autoriser les opérations de maintenance de l'émulateur sans qu'il soit nécessaire de terminer toutes les vérifications fonctionnelles en cours. Dans une implémentation utilisant un environnement Unix/Linux, la suspension du processus logiciel peut être effectuée en envoyant une commande : « SIGSTOP » à ce processus logiciel. Le processus logiciel reste alors gelé dans le fichier de mémoire virtuelle de la station hôte. Ceci permet également de libérer de la puissance de calcul ainsi que de l'espace mémoire. Une commande SIGSTOP est classique et connue par l'homme du métier. Celui-ci pourra également se référer à toute fins utiles à l'ouvrage intitulé « Advanced Unix Programming », deuxième édition, 2004, Adison Wesley, M.J. Rochkind.

La déconnexion du processus logiciel applicatif du module de gestion MG de l'interface INT1, est effectuée avant de faire la sauvegarde F2, car ni le système d'exploitation (« Operating System : OS ») ni les outils classiques de sauvegarde de logiciels, par exemple l'outil DMTCP, ne permettent de refaire l'initialisation du module depuis le processus logiciel.

Par ailleurs, cette déconnexion préalablement à la sauvegarde du fichier F2 est obligatoire dans le mode « suspend » (suspension du test en cours) pour pouvoir réutiliser l'émulateur avec un autre logiciel applicatif.

La sauvegarde du premier fichier F1 représentatif de l'état de l'émulateur lors de son arrêt est généralement faite en deux sous-étapes. La première, référencée 27a, est la récupération de toutes les informations de l'émulateur et leur sauvegarde dans une mémoire M1 de la station hôte. La deuxième, référencée 27b, est la sauvegarde de ces informations dans le fichier F1 sur le disque dur.

La sauvegarde du premier fichier F1 (sous-étapes 27a et 27b) peut être effectuée avant la déconnexion 28 du processus logiciel applicatif du module de gestion MG de l'interface.

En variante, dans certains cas, la deuxième sous-étape 27b peut être effectuée en tache de fond, parallèlement à la déconnexion 28 et à la sauvegarde 29 du fichier F2.

On se réfère maintenant plus particulièrement à la figure 4 pour décrire une restauration de l'état sauvegardé de façon à poursuivre la vérification fonctionnelle du circuit sous test émulé et de son environnement de test.

Généralement, lors de cette opération de restauration, les adresses de l'interface INT1 et de la mémoire partagée SM ont changé. Aussi, après chargement 40 du fichier F2 dans la mémoire programme de la station hôte, on procède à une reconnexion du processus logiciel (étape 41) avec réinitialisation des adresses de l'interface INT1 et de la mémoire partagée.

Ce chargement 40 du fichier F2 dans la mémoire programme de la station hôte et la reconnexion du processus logiciel au module de gestion MG de l'interface 41 sont effectués par les premiers moyens de traitement MT1.

Par ailleurs, les deuxièmes moyens de traitement MT2 rechargent l'état de l'émulateur (étape 42) à partir du premier fichier sauvegardé F1. Le rechargement de l'état de l'émulateur nécessite la réouverture du pilote de l'émulateur. Cette opération de réouverture du pilote est par exemple également décrite dans l'ouvrage de O'Reilly et A. Rubini mentionné ci-avant.

Puis, les moyens de commande MCR redémarrent l'émulateur (étape 43) et le processus logiciel (étape 44).

Il convient de noter que lorsque l'on a effectué une suspension du test en cours, le réveil (étape 44) du processus logiciel applicatif peut être effectué en envoyant une commande « SIGCONT » à ce processus dans un environnement Unix/Linux.

L'invention permet ainsi de sauvegarder l'état d'un circuit sous test émulé dans un émulateur et de son environnement de test et de restaurer cet état sans pertes de données et sans nécessiter d'écriture de procédures spécifiques par des développeurs logiciels pour sauvegarder les données traitées par les processus logiciels et par l'émulateur.

L'invention n'est pas limitée aux modes de mise en oeuvre et de réalisation qui viennent d'être décrits mais en embrasse toutes les variantes. Ainsi, lorsque plusieurs logiciels applicatifs tournent sur la station hôte, les étapes 20 et 21 de la figure 2 sont exécutées pour chaque logiciel applicatif avant arrêt de l'émulateur.

De même, les étapes 28, 29, 40 et 41 ainsi que l'étape 44 sont effectuées pour chacun des logiciels applicatifs.

Par ailleurs dans certains cas, il est possible de communiquer depuis la station-hôte vers l'émulateur en utilisant la mémoire partagée pour envoyer des données dans l'émulateur. Ce mécanisme est connu par l'homme du métier sous l'acronyme DMA (Direct Memory Access).

Plus précisément, le processus logiciel applicatif écrit les données dans la mémoire partagée, spécifie à l'émulateur l'adresse et le nombre de ces données dans la mémoire partagée ainsi que l'adresse de destination des données dans l'émulateur, puis il commande à l'émulateur de commencer le transfert. L'émulateur lit les données dans la mémoire partagée et les écrit dans les ressources à l'adresse spécifiée, puis la fin du transfert est signifiée au processus logiciel applicatif.

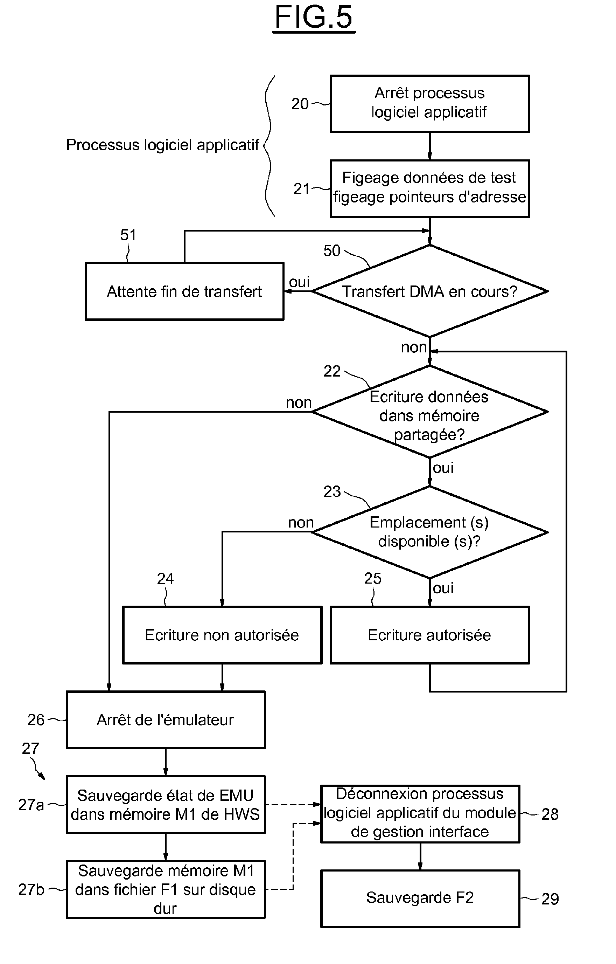

Aussi, comme illustré sur la figure 5, dans le cas où des transferts DMA sont en cours (étape 50), il faut attendre que les transferts en cours soient tous terminés (étape 51) avant d'arrêter l'émulateur.

Et si cet envoi de données déclenche une réponse de l'émulateur, cette réponse doit être faite s'il y a des emplacements libres dans la mémoire partagée, avant que d'autres données éventuelles ne résultant pas de ces transferts puissent être écrites s'il reste des emplacements libres.

Les autres étapes de la figure 5 sont identiques aux étapes correspondantes de la figure 2.

## Revendications

1. Procédé de sauvegarde d'au moins un état d'un circuit sous test et de son environnement de test, le circuit sous test étant émulé dans un émulateur et l'environnement de test mettant en oeuvre au moins un processus logiciel applicatif, exempt d'un propre mécanisme de sauvegarde de son état, exécuté sur une station hôte (HWS) communiquant avec l'émulateur par l'intermédiaire d'une interface (INT1) gérée par un module de gestion (MG) au sein de la station hôte, l'émulateur (EMU) communiquant en écriture avec le processus logiciel applicatif par l'intermédiaire d'une mémoire partagée (SM) lue au moins par ledit processus logiciel, le procédé comprenant un arrêt (20) du processus logiciel applicatif avec figeage (21) des données de test et des pointeurs d'adresses dans la mémoire partagée, un arrêt de l'émulateur, l'écriture de données par l'émulateur dans la mémoire partagée entre l'arrêt du processus logiciel et l'arrêt de l'émulateur n'étant autorisé qu'en présence d'emplacements mémoire disponibles dans la mémoire partagée, une sauvegarde (27) d'un premier fichier (F1) représentatif de l'état de l'émulateur lors de son arrêt, une déconnexion (28) du processus logiciel applicatif dudit module de gestion de l'interface, et une sauvegarde (29) d'un fichier de programme exécutable (F2) représentatif de l'état du processus logiciel applicatif lors de son arrêt.

2. Procédé selon la revendication 1, dans lequel la sauvegarde (29) du fichier de programme exécutable est effectuée, après déconnexion du processus logiciel applicatif du module de gestion de l'interface, par le système d'exploitation de la station hôte dans un fichier de mémoire virtuelle.

3. Procédé selon la revendication 1, dans lequel la sauvegarde (29) du fichier de programme exécutable est effectuée, après déconnexion du processus logiciel applicatif du module de gestion de l'interface, par un outil informatique spécifique dans un fichier de mémoire de type ROM.

4. Procédé selon l'une des revendications précédentes, dans lequel une partie (27b) de la sauvegarde du premier fichier est effectuée en tâche de fond parallèlement à la déconnexion du processus logiciel applicatif et à la sauvegarde du fichier de programme exécutable.

5. Procédé selon l'une des revendications précédentes, dans lequel la mémoire partagée est lue par l'émulateur lors de transfert de données émanant du processus logiciel applicatif à destination de l'émulateur, et le procédé comprend, après l'arrêt du processus logiciel applicatif et avant l'arrêt de l'émulateur, une poursuite (51) des transferts en cours jusqu'à ce qu'ils soient terminés, et en présence d'emplacement libres dans la mémoire partagée, l'écriture dans la mémoire partagée par l'émulateur de données résultant de ces transferts est prioritaire.

6. Procédé de restauration d'un état d'un circuit sous test et de son environnement de test sauvegardé par le procédé selon l'une des revendications précédentes, comprenant un chargement (40) du fichier de programme exécutable (F2) dans une mémoire programme de la station hôte, une reconnexion (41) du processus logiciel au module de gestion de ladite interface avec réinitialisation des adresses de ladite interface et de ladite mémoire partagée dans les registres du processus logiciel, un rechargement de l'état (42) de l'émulateur à partir du premier fichier sauvegardé (F1), un lancement (43) de l'émulateur et un lancement (44) du processus logiciel.

7. Dispositif de sauvegarde d'au moins un état d'un circuit sous test et de son environnement de test, le circuit sous test (DUT) étant destiné à être émulé dans un émulateur (EMU) et l'environnement de test étant destiné à mettre en oeuvre au moins un processus logiciel applicatif, exempt d'un propre mécanisme de sauvegarde de son état, exécutable sur une station hôte (HWS) configurée pour communiquer avec l'émulateur par l'intermédiaire d'une interface gérée par un module de gestion au sein de la station hôte, l'émulateur étant configuré pour communiquer en écriture avec le processus logiciel applicatif par l'intermédiaire d'une mémoire partagée configurée pour être lue au moins par ledit processus logiciel, le dispositif comprenant des premiers moyens de commande (MC1) configurés pour arrêter le processus logiciel applicatif avec figeage des données de test et des pointeurs d'adresses dans la mémoire partagée, des deuxièmes moyens de commande (MC2) configurés pour arrêter l'émulateur et pour n'autoriser l'écriture de données par l'émulateur dans la mémoire partagée entre l'arrêt du processus logiciel et l'arrêt de l'émulateur qu'en présence d'emplacements mémoire disponibles dans la mémoire partagée, des premiers moyens de sauvegarde (MSV1) configurés pour effectuer une sauvegarde d'un premier fichier représentatif de l'état de l'émulateur lors de son arrêt, des troisièmes moyens de commande (MC3) configurés pour déconnecter le processus logiciel applicatif dudit module de gestion de l'interface, et des deuxièmes moyens de sauvegarde (MSV2) configurés pour effectuer une sauvegarde d'un fichier de programme exécutable représentatif de l'état du processus logiciel applicatif lors de son arrêt.

8. Dispositif selon la revendication 7, dans lequel les deuxièmes moyens de sauvegarde (MSV2) comprennent le système d'exploitation de la station hôte configuré pour effectuer la sauvegarde du fichier de programme exécutable, après déconnexion du processus logiciel applicatif du module de gestion de l'interface, dans un fichier de mémoire virtuelle.

9. Dispositif selon la revendication 7, dans lequel les deuxièmes moyens de sauvegarde (MSV2) comprennent un outil informatique spécifique configuré pour effectuer la sauvegarde du fichier de programme exécutable, après déconnexion du processus logiciel applicatif du module de gestion de l'interface, dans un fichier de mémoire de type ROM.

10. Dispositif selon l'une des revendications 7 à 9, dans lequel les premiers moyens de sauvegarde (MSV1) sont configurés pour effectuer une partie la sauvegarde du premier fichier en tâche de fond parallèlement à la déconnexion du processus logiciel applicatif et à la sauvegarde du fichier de programme exécutable.

11. Dispositif selon l'une des revendications 7 à 10, dans lequel la mémoire partagée est lue par l'émulateur lors de transfert de données émanant du processus logiciel applicatif à destination de l'émulateur, les deuxièmes moyens de commande (MC2) sont en outre configurés pour, après l'arrêt du processus logiciel applicatif et avant l'arrêt de l'émulateur, autoriser une poursuite des transferts en cours jusqu'à ce qu'ils soient terminés, et en présence d'emplacement libres dans la mémoire partagée, autoriser prioritairement l'écriture dans la mémoire partagée par l'émulateur de données résultant de ces transferts.

12. Dispositif de restauration d'au moins un état d'un circuit sous test et de son environnement de test sauvegardé par le dispositif selon l'une des revendications 7 à 11, comprenant des premiers moyens de traitement (MT1) configurés pour charger le fichier de programme exécutable dans une mémoire programme de la station hôte, et pour reconnecter le processus logiciel au module de gestion de ladite interface avec réinitialisation des adresses de ladite interface et de ladite mémoire partagée dans les registres du processus logiciel, des deuxièmes moyens de traitement (MT2) configurés pour recharger l'état de l'émulateur à partir du premier fichier sauvegardé, et des moyens de commande (MCR) configurés pour redémarrer l'émulateur et le processus logiciel.

## Patentansprüche

1. Verfahren zur Speicherung mindestens eines Zustands eines zu testenden Schaltkreises und seiner Testumgebung, wobei der zu testende Schaltkreis in einem Emulator emuliert wird und die Testumgebung mindestens einen Applikationssoftwareprozess implementiert, der keinen eigenen Mechanismus zur Speicherung seines Zustands aufweist, der auf einer Host-Station (HWS) ausgeführt wird, die mit dem Emulator über eine Schnittstelle (INT1) kommuniziert, die von einem Steuerungsmodul (MG) in der Host-Station gesteuert wird, wobei der Emulator (EMU) mit dem Anwendungssoftwareprozess über einen gemeinsamen Speicher (SM) schriftlich kommuniziert, der mindestens von dem Softwareprozess gelesen wird, wobei das Verfahren ein Anhalten (20) des Anwendungssoftwareprozesses mit Einfrieren (21) der Testdaten und der Adresszeiger in dem gemeinsamen Speicher, ein Anhalten des Emulators, wobei das Schreiben von Daten durch den Emulator in den gemeinsamen Speicher zwischen dem Anhalten des Softwareprozesses und dem Anhalten des Emulators nur in Gegenwart von in dem gemeinsamen Speicher verfügbaren Speicherplätzen autorisiert wird, eine Speicherung (27) einer ersten Datei (F1), die den Zustand des Emulators im Moment seines Anhaltens darstellt, eine Trennung (28) des Anwendungssoftwareprozesses von dem Steuerungsmodul der Schnittstelle und eine Speicherung (29) einer ausführbaren Programmdatei (F2), die den Zustand des Anwendungssoftwareprozesses im Moment seines Anhaltens darstellt, umfasst.

2. Verfahren nach Anspruch 1, wobei die Speicherung (29) der ausführbaren Programmdatei nach der Trennung des Anwendungssoftwareprozesses von dem Steuerungsmodul der Schnittstelle durch das Betriebssystem der Host-Station in einer virtuellen Speicherdatei durchgeführt wird.

3. Verfahren nach Anspruch 1, wobei die Speicherung (29) der ausführbaren Programmdatei nach der Trennung des Anwendungssoftwareprozesses von dem Steuerungsmodul der Schnittstelle durch ein spezifisches IT-Werkzeug in einer ROM-Speicherdatei durchgeführt wird.

4. Verfahren nach einem der vorhergehenden Ansprüche, wobei ein Teil (27b) der Speicherung der ersten Datei als Hintergrundaufgabe parallel zur Trennung des Anwendungssoftwareprozesses und der Speicherung der ausführbaren Programmdatei durchgeführt wird.

5. Verfahren nach einem der vorhergehenden Ansprüche, wobei der gemeinsame Speicher von dem Emulator während der Datenübertragung von dem Anwendungssoftwareprozess zum Emulator, gelesen wird, und wobei das Verfahren nach dem Anhalten des Anwendungssoftwareprozesses und vor dem Anhalten des Emulators eine Fortführung (51) der laufenden Übertragungen bis sie beendet sind und in Gegenwart von freien Plätzen in dem gemeinsamen Speicher umfasst, wobei das Schreiben von Daten, die aus diesen Übertragungen resultieren, in den gemeinsamen Speicher durch den Emulator prioritär ist.

6. Verfahren zur Wiederherstellung eines Zustands eines zu testenden Schaltkreises und seiner Testumgebung, der von dem Verfahren gemäß einem der vorhergehenden Ansprüche gespeichert wird, umfassend ein Laden (40) der ausführbaren Programmdatei (F2) in einen Programmspeicher der Host-Station, eine erneute Verbindung (41) des Softwareprozesses mit dem Steuerungsmodul der Schnittstelle mit Reinitialisierung der Adressen der Schnittstelle und des gemeinsamen Speichers in den Registern des Softwareprozesses, ein Zurückladen des Zustands (42) des Emulators aus der ersten gesicherten Datei (F1), ein Starten (43) des Emulators und ein Starten (44) des Softwareprozesses.

7. Vorrichtung zur Speicherung mindestens eines Zustands eines zu testenden Schaltkreises und seiner Testumgebung, wobei der zu testende Schaltkreis (DUT) dazu bestimmt ist, in einem Emulator (EMU) emuliert zu werden und die Testumgebung dazu bestimmt ist, mindestens einen Anwendungssoftwareprozess zu implementieren, der keinen eigenen Mechanismus zur Speicherung seines Zustands aufweist, der auf einer Host-Station (HWS) ausführbar ist, die konfiguriert ist, um mit dem Emulator über eine Schnittstelle zu kommunizieren, die von einem Steuerungsmodul in der Host-Station gesteuert wird, wobei der Emulator konfiguriert ist, um mit dem Anwendungssoftwareprozess über einen gemeinsamen Speicher schriftlich zu kommunizieren, der konfiguriert ist, um mindestens von dem Softwareprozess gelesen zu werden, wobei die Vorrichtung erste Steuerungsmittel (MC1) umfasst, die konfiguriert sind, um den Anwendungssoftwareprozess mit Einfrieren der Testdaten und der Adresszeiger in dem gemeinsamen Speicher anzuhalten, zweite Steuerungsmittel (MC2), die konfiguriert sind, um den Emulator anzuhalten und um das Schreiben von Daten durch den Emulator in den gemeinsamen Speicher zwischen dem Anhalten des Softwareprozesses und dem Anhalten des Emulators nur in Gegenwart von in dem gemeinsamen Speicher verfügbaren Speicherplätzen zu autorisieren, erste Speicherungsmittel (MSV1), die konfiguriert sind, um eine Speicherung einer ersten Datei durchzuführen, die den Zustand des Emulators im Moment seines Anhaltens darstellt, dritte Steuerungsmittel (MC3), die konfiguriert sind, um den Anwendungssoftwareprozess von dem Steuerungsmodul der Schnittstelle zu trennen, und zweite Speicherungsmittel (MSV2), die konfiguriert sind, um eine Speicherung einer ausführbaren Programmdatei durchzuführen, die den Zustand des Anwendungssoftwareprozesses im Moment seines Anhaltens darstellt, umfasst.

8. Vorrichtung nach Anspruch 7, wobei die zweiten Speicherungsmittel (MSV2) das Betriebssystem der Host-Station umfassen, das konfiguriert ist, um die Speicherung der ausführbaren Programmdatei nach der Trennung des Anwendungssoftwareprozesses von dem Steuerungsmodul der Schnittstelle in einer virtuellen Speicherdatei durchzuführen.

9. Vorrichtung nach Anspruch 7, wobei die zweiten Speicherungsmittel (MSV2) ein spezifisches IT-Werkzeug umfassen, das konfiguriert ist, um die Speicherung der ausführbaren Programmdatei nach der Trennung des Anwendungssoftwareprozesses von dem Steuerungsmodul der Schnittstelle in einer ROM-Speicherdatei durchzuführen.

10. Vorrichtung nach einem der Ansprüche 7 bis 9, wobei die ersten Speicherungsmittel (MSV1) konfiguriert sind, um einen Teil der Speicherung der ersten Datei als Hintergrundaufgabe parallel zur Trennung des Anwendungssoftwareprozesses und zur Speicherung der ausführbaren Programmdatei durchzuführen.

11. Vorrichtung nach einem der Ansprüche 7 bis 10, wobei der gemeinsame Speicher von dem Emulator während der Datenübertragung von dem Anwendungssoftwareprozess zum Emulator gelesen wird, wobei die zweiten Steuerungsmittel (MC2) ferner konfiguriert sind, um nach dem Anhalten des Anwendungssoftwareprozesses und vor dem Anhalten des Emulators eine Fortführung der laufenden Übertragungen bis sie beendet sind und in Gegenwart von freien Plätzen in dem gemeinsamen Speicher zu autorisieren und das Schreiben von Daten, die aus diesen Übertragungen resultieren, in den gemeinsamen Speicher durch den Emulator prioritär zu autorisieren.

12. Vorrichtung zur Wiederherstellung mindestens eines Zustands eines zu testenden Schaltkreises und seiner Testumgebung, der von der Vorrichtung nach einem der Ansprüche 7 bis 11 gespeichert wurde, umfassend erste Behandlungsmittel (MT1), die konfiguriert sind, um die ausführbare Programmdatei in einen Programmspeicher der Host-Station zu laden und um den Softwareprozess erneut mit dem Steuerungsmodul der Schnittstelle zu verbinden, mit Reinitialisierung der Adressen der Schnittstelle und des gemeinsamen Speichers in den Registern des Softwareprozesses, zweite Behandlungsmittel (MT2), die konfiguriert sind, um den Zustand des Emulators aus der ersten gespeicherten Datei zurückzuladen, und Steuerungsmittel (MCR), die konfiguriert sind, um den Emulator und den Softwareprozess neu zu starten.

## Claims

1. Method for saving at least one state of a circuit under test and its test environment, the circuit under test being emulated in an emulator and the test environment implementing at least one application software process, which is free of a mechanism of its own for saving its state, that is executed on a host station (HWS) communicating with the emulator by means of an interface (INT1) that is managed by a management module (MG) within the host station, the emulator (EMU) communicating in writing with the application software process by means of a shared memory (SM) that is read at least by said software process, the method comprising stopping (20) of the application software process with freezing (21) of the test data and of the address pointers in the shared memory, stopping of the emulator, the writing of data to the shared memory by the emulator between the stopping of the software process and the stopping of the emulator being authorized only in the presence of memory locations that are available in the shared memory, saving (27) of a first file (F1) that is representative of the state of the emulator when it is stopped, disconnection (28) of the application software process from said management module of the interface, and saving (29) of an executable program file (F2) that is representative of the state of the application software process when it is stopped.

2. Method according to Claim 1, in which the saving (29) of the executable program file is effected, following disconnection of the application software process from the management module of the interface, by the operating system of the host station in a virtual memory file.

3. Method according to Claim 1, in which the saving (29) of the executable program file is effected, following disconnection of the application software process from the management module of the interface, by a specific data processing tool in a memory file of ROM type.

4. Method according to one of the preceding claims, in which a portion (27b) of the saving of the first file is effected as a background task in parallel with the disconnection of the application software process and with the saving of the executable program file.

5. Method according to one of the preceding claims, in which the shared memory is read by the emulator when data originating from the application software process are transferred to the emulator, and the method comprises, following the stopping of the application software process and before the stopping of the emulator, continuation (51) of the transfers in progress until they have finished, and in the presence of free locations in the shared memory, the writing, to the shared memory, by the emulator, of data resulting from these transfers has priority.

6. Method for restoring a state of a circuit under test and its test environment saved by the method according to one of the preceding claims, comprising loading (40) of the executable program file (F2) into a program memory of the host station, reconnection (41) of the software process to the management module of said interface with re-initialization of the addresses of said interface and of said shared memory in the registers of the software process, re-loading of the state (42) of the emulator from the first saved file (F1), launching (43) of the emulator and launching (44) of the software process.

7. Device for saving at least one state of a circuit under test and its test environment, the circuit under test (DUT) being intended to be emulated in an emulator (EMU) and the test environment being intended to implement at least one application software process, which is free of a mechanism of its own for saving its state, that can be executed on a host station (HWS) that is configured to communicate with the emulator by means of an interface that is managed by a management module within the host station, the emulator being configured to communicate in writing with the application software process by means of a shared memory that is configured to be read at least by said software process, the device comprising first control means (MC1) that are configured to stop the application software process with freezing of the test data and of the address pointers in the shared memory, second control means (MC2) that are configured to stop the emulator and to authorize the writing of data to the shared memory by the emulator between the stopping of the software process and the stopping of the emulator only in the presence of memory locations that are available in the shared memory, first saving means (MSV1) that are configured to effect saving of a first file that is representative of the state of the emulator when it is stopped, third control means (MC3) that are configured to disconnect the application software process from said management module of the interface, and second saving means (MSV2) that are configured to effect saving of an executable program file that is representative of the state of the application software process when it is stopped.

8. Device according to Claim 7, in which the second saving means (MSV2) comprise the operating system of the host station that is configured to effect the saving of the executable program file, following disconnection of the application software process from the management module of the interface, in a virtual memory file.

9. Device according to Claim 7, in which the second saving means (MSV2) comprise a specific data processing tool that is configured to effect the saving of the executable program file, following disconnection of the application software process from the management module of the interface, in a memory file of ROM type.

10. Device according to one of Claims 7 to 9, in which the first saving means (MSV1) are configured to effect a portion of the saving of the first file as a background task in parallel with the disconnection of the application software process and with the saving of the executable program file.

11. Device according to one of Claims 7 to 10, in which the shared memory is read by the emulator when data originating from the application software process are transferred to the emulator, the second control means (MC2) are moreover configured to, following the stopping of the application software process and before the stopping of the emulator, authorize continuation of the transfers in progress until they have finished, and in the presence of free locations in the shared memory, to authorize as priority the writing, to the shared memory, by the emulator, of data resulting from these transfers.

12. Device for restoring at least one state of a circuit under test and its test environment saved by the device according to one of Claims 7 to 11, comprising first processing means (MT1) that are configured to load the executable program file into a program memory of the host station, and to reconnect the software process to the management module of said interface with re-initialization of the addresses of said interface and of said shared memory in the registers of the software process, second processing means (MT2) that are configured to re-load the state of the emulator from the first saved file, and control means (MCR) that are configured to re-start the emulator and the software process.
